# EUROPEAN PATENT SPECIFICATION

(11) **EP 0 540 984 B1**
(45) Date of publication and mention of the grant of the patent: **30.08.1995**
(21) Application number: 92118333.1
(22) Date of filing: 27.10.1992
(51) Int. Cl.: B66B 1/34, B66B 5/00, B66B 3/00, G05B 19/418

(54) **Centralized change of parameters of hall and car equipment**
Zentralisierte Parameterveränderungen von Stockwerk- und Kabineanlagen
Ajustement centralisé des paramètres pour des installations au palier et dans la cabine

(30) Priority: 08.11.1991 FI 915296
(43) Date of publication of application: 12.05.1993
(73) Proprietor: KONE Elevator GmbH, 6340 Baar (CH)
(72) Inventor: Burton, Etienne, B-4877 Olne (BE); Leppänen, Heikki, SF-05840 Hyvinkää (FI); Selin, Kimmo, SF-05460 Hyvinkää (FI); Tamminen, Aki, SF-05830 Hyvinkää (FI)
(74) Representative: Zipse + Habersack

(56) References cited:
- EP-A- 0 335 412
- EP-A- 0 403 232
- WO-A-86/04701
- GB-A- 2 164 173
- US-A- 4 335 426
- PATENT ABSTRACTS OF JAPAN vol. 10, no. 344 (P-518)(2400) 20 November 1986 & JP-A-61 145 610 (MITSUBISHI ELECTRIC CORP.)

## Description

The present invention relates to a procedure for changing the parameters of the hall and car equipment of an elevator in a system employing serial communication.

At present, elevators are already provided with a facility for the programming of the signalling devices. The programming is done at the production stage separately for each device. It is also possible to do the programming in the field by using a special programming apparatus which is connected in turn to each signalling device. This solution involves several problems and limitations. Modifying the devices is a laborious task and the modification facility cannot be utilized to the full. When signal patterns specific to a particular delivery are used in the signalling devices, changing a spare part requires either programming the part in the field or ordering a new part from the factory. The devices cannot be reprogrammed while the elevator is in use, because the parallel wiring between the elevator and its signalling devices is insufficient for the transfer of the amount of data required for the reprogramming of the devices and because the signal devices currently used have not been designed for this purpose. For these reasons, the signal devices cannot be used effectively, e.g. so as to adapt them to the varying situations in elevator operation.

The current method is inflexible and modifying the signal devices requires measures by the production side. Ordering the spare parts also takes time and causes unnecessary waiting times at the installation sites.

EP-A 335 412 discloses an elevator network wherein control data and specification data of distributed terminals are transmitted via a serial network under control of an elevator controller. Specification data regarding the function of a terminal station, for example an indicator, is written into an EEPROM. Changing this kind of data for such terminal stations is easily possible by means of a maintenance/debug-tool by changing the contents of this EEPROM, in which the host side specification data or programs for making up terminal specification data have been stored.

The object of the invention is to eliminate the drawbacks mentioned above.

The procedure according to the invention is defined by the features of claim 1.

According to the invention changes of parameters of hall and car equipment are copied via the network from one elevator to another.

According to a preferred embodiment of the invention, it is also possible that the user interface can be fixedly or separately (detachably) connected to the elevator controller or to the serial communication networks associated with it.

According to a preferred embodiment of the invention spare parts can advantageously be programmed at the site of installation by means of the user interface.

A preferred embodiment of the invention is characterized in that new functions are added to standard devices by means of a user interface controller or elevator controller.

An embodiment of the invention is characterized in that the programming is performed during use, installation or servicing of the elevator.

The invention may also provide that the changes are controlled either from a separate control room or from the machine room of the elevator.

According to a preferred embodiment of the invention it is also possible to test the changes in the signalling devices immediately in the machine room by using a separate display.

The procedure of the invention for changing the parameters of hall and car equipment has several advantages as compared with previously known solutions.
- All devices connected to the serial bus, such as buttons, direction arrows, car position indicators, sound signal devices, car panel buttons and position indicators and so on, can be reprogrammed (modified),
- the reprogramming is done separately for each floor during normal use, servicing or installation of the elevator,
- a new spare part can be programmed in the field without special tools in connection with the replacement,
- the dynamic reprogrammability during use also allows the same signalling device to be used alternately for different signalling functions, e.g. display of waiting time, zone division indication during peak traffic, and car position indication,
- the procedure of the invention is easy to implement,
- the invention permits a considerable reduction of the time required for ordering and installation.

In the following, the invention is described in detail by referring to the attached drawing, presenting the user interface.

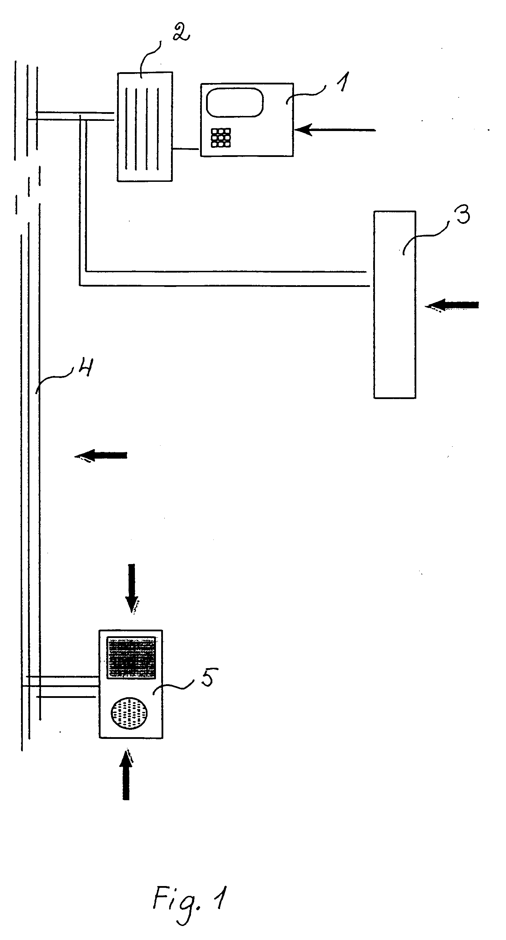

Figure 1 presents a diagram showing a user interface 1 for the changing of parameters. Using the keypad provided, the required changes are made in the parameters of a desired car panel 3. The car panel 3 is a signalling board which contains buttons, displays and various text fields. From the display of the user interface 1, suitable parameters/signal sets can be selected, and the signalling devices and actuators can be programmed in accordance with these parameters/signal sets. The data is passed via the shaft wiring 4 to the signalling device 5. The elevator controller 2 transmits the signals to their destinations.

It is obvious to a person skilled in the art that different embodiments of the invention are not restricted to the examples described above, but that they may be varied within the scope of the following claims.

## Claims

1. Procedure for changing the parameters of the hall and car equipment in an elevator bank comprising at least two elevators in a system employing serial communication, wherein signalling devices and electrically controlled actuators are programmed in a centralized manner, making use of serial communication buses, from a selected point connected to the network, by means of a user interface (1) or automatically by means of the elevator controller (2),
**characterized** in that
the changes are copied via the network from one elevator to another.

2. Procedure according to claim 1, **characterized** in that the user interface (1) can be fixedly or detachably connected to the elevator controller (2) or to the serial communication networks (4) associated with it.

3. Procedure according to claim 1 or 2, **characterized** in that spare parts are programmed at the site of installation by means of the user interface (1).

4. Procedure according to any one of claims 1-3, **characterized** in that new functions are added to standard devices by means of a user interface controller or elevator controller.

5. Procedure according to any one of claims 1-4, **characterized** in that the programming is performed during use, installation or servicing of the elevator.

6. Procedure according to any one of claims 1-5, **characterized** in that the changes are controlled either from a separate control room or from the machine room of the elevator.

7. Procedure according to any one of claims 1-6, **characterized** in that the changes in the signalling devices are tested in the machine room using a separate display.

## Patentansprüche

1. Verfahren zum Ändern der Parameter der Flur- und Kabinenausrüstung in einer Aufzugbank mit zumindest zwei Aufzügen in einem System unter Verwendung serieller Kommunikation, wobei Signalisierungseinrichtungen und elektrisch gesteuerte Aktuatoren in zentraler Weise programmiert werden unter Verwendung eines seriellen Kommunikationsbusses von einem gewählten Punkt aus, der über eine Benutzerschnittstelle (1) mit dem Netzwerk verbunden ist, oder automatisch mittels der Aufzugsteuerung (2),
dadurch **gekennzeichnet**,
daß die Änderungen über das Netzwerk von einem Aufzug zum anderen kopiert werden.

2. Verfahren nach Anspruch 1,
dadurch **gekennzeichnet**,
daß die Benutzerschnittstelle (1) fest oder entnehmbar mit der Aufzugsteuerung (2) oder den damit verbundenen seriellen Kommunikationsnetzwerken (4) verbunden ist.

3. Verfahren nach Anspruch 1 oder 2,
dadurch **gekennzeichnet**,
daß Ersatzteile am Ort der Installation über die Benutzerschnittstelle (1) programmiert werden.

4. Verfahren nach einem der Ansprüche 1 bis 3,
dadurch **gekennzeichnet**,
daß neue Funktionen zu Standardeinrichtungen mittels der Steuerung einer Benutzerschnittstelle oder der Aufzugsteuerung hinzugefügt werden.

5. Verfahren nach einem der Ansprüche 1 bis 4,
dadurch **gekennzeichnet**,
daß die Programmierung während des Betriebs, der Installation oder der Wartung des Aufzugs durchgeführt wird.

6. Verfahren nach einem der Ansprüche 1 bis 5,
dadurch **gekennzeichnet**,
daß die Änderungen entweder von einem separaten Steuerungsraum oder von dem Maschinenraum des Aufzugs aus gesteuert werden.

7. Verfahren nach einem der Ansprüche 1 bis 6,
dadurch **gekennzeichnet**,
daß die Änderungen in den Signalisierungseinrichtungen im Maschinenraum unter Verwendung eines separaten Displays überprüft werden.

## Revendications

1. Mode opératoire pour la modification des paramètres des installations sur le palier et dans les cabines d'un groupe d'ascenseurs, comprenant au moins deux ascenseurs dans un système utilisant la communication série, dans lequel les dispositifs de signalisation et les actionneurs à commande électrique sont programmés d'une manière centralisée, en faisant appel à des bus de communication série, à partir d'un point sélectionné relié au réseau, au moyen d'une interface utilisateur (1) ou automatiquement au moyen du régisseur d'ascenseurs (2),
caractérisé en ce que
les modifications sont reproduites, au moyen du réseau, d'un ascenseur à un autre.

2. Mode opératoire selon la revendication 1, caractérisé en ce que l'interface utilisateur (1) peut être reliée, de manière fixe ou détachable au régisseur d'ascenseurs (2) ou au réseau de communication série (4) qui lui est associé.

3. Mode opératoire selon la revendication 1 ou 2, caractérisé en ce que des pièces détachées sont programmées à l'endroit de l'installation, au moyen de l'interface utilisateur (1).

4. Mode opératoire selon l'une quelconque des revendications 1 à 3, caractérisé en ce que de nouvelles fonctions sont ajoutées aux dispositifs courants au moyen d'un régisseur d'interface utilisateur ou d'un régisseur d'ascenseurs.

5. Mode opératoire selon l'une quelconque des revendications 1 à 4, caractérisé en ce que la programmation est effectuée pendant l'utilisation, l'installation ou l'entretien de l'ascenseur.

6. Mode opératoire selon l'une quelconque des revendications 1 à 5, caractérisé en ce que les modifications sont commandées soit à partir d'une salle de commande distincte soit à partir de la salle des machines de l'ascenseur.

7. Mode opératoire selon l'une quelconque des revendications 1 à 6, caractérisé en ce que les modifications des dispositifs de signalisation sont contrôlées dans la salle des machines au moyen d'un afficheur séparé.
